## Europäisches Patentamt

## European Patent Office

## Office européen des brevets

(11) Veröffentlichungsnummer: **0 299 393**

**A2**

(12) **EUROPÄISCHE PATENTANMELDUNG**

(21) Anmeldenummer: **88111007.6**

(22) Anmeldetag: **09.07.88**

(51) Int. Cl.4: **G02B 3/14**

(30) Priorität: **14.07.87 IL 83179**
**03.03.88 IL 83179**

(43) Veröffentlichungstag der Anmeldung:
**18.01.89 Patentblatt 89/03**

(84) Benannte Vertragsstaaten:
**AT BE CH DE ES FR GB GR IT LI LU NL SE**

(71) Anmelder: **Barnea, Daniel I., Dr.**
**1 Ugarit Street**
**IL-69016 Tel Aviv(IL)**

(72) Erfinder: **Barnea, Daniel I., Dr.**
**1 Ugarit Street**
**IL-69016 Tel Aviv(IL)**

(74) Vertreter: **Beckensträter, Friedrich Wihelm, Dr.**
**Falkensteiner Strasse 23**
**D-6000 Frankfurt am Main 1(DE)**

(54) **Optische Linse oder optisches Linsensystem mit variable Servo-Fokussierung.**

(57) Optische Linse mit variabler Servo-Fokussierung, die aus einem Paar optischer Membranen (1, 6) gebildet ist, die jeweils einen Umfangsrand aufweisen und von denen wenigstens eine flexibel ist. Die Fassung (8″) hält dabei die Membranen (1, 6) an ihren Rändern nebeneinanderliegend derart fest, daß zwischen den Flächen der Membranen (1, 6) und ihren gefaßten Umfangsrändern ein eingeschlossener Volumenraum (9), der mit einem Brechungsfluid (20) gefüllt ist, definiert ist. Eine mit der Fassung (8″) zusammenwirkende Steuervorrichtung (31) erlaubt die wahlweise Anlegung von Kräften auf die Umfangsränder der Membranen (1, 6) die den Fluiddruck im eingeschlossenen Volumen (9A) ändern. Die Membranen (1, 6) und die Fassung (8″) sind so ausgebildet und angeordnet, daß die Membranflächen in im wesentlichen sphärischer Weise im Ansprechen auf Druckänderungen im Fluid (20) veränderbar sind.

Fig 5a

## Optische Linse oder optisches Linsensystem mit variabler Servo-Fokussierung

Die Erfindung betrifft eine optische Linse oder optisches Linsensystem mit einer Servovorrichtung, durch welche die Brennweiten der Linse veränderbar sind.

Es besteht ein großer Bedarf an optischen Linsen, deren Brennweite leicht verändert werden kann, insbesondere für Sehhilfen bzw. Brillengläser. Das menschliche Auge verliert etwa ab der Mitte des fünften Lebensjahrzehnts seine natürliche Flexibilität zum Scharfsehen sowohl im Nah- als auch im Fernbereich. Als Folge davon benötigen die meisten Menschen Sehhilfen, d.h. eine Brille sowohl zum Lesen als auch für Weitsicht.

Es gibt einige Produkte, die versuchen, dieses Problem einer Sehhilfe sowohl für Nah- als auch für Fernsicht zu lösen: Lesebrillen, bifokale und multifokale Brillen. Aber jede von ihnen hat ihre Nachteile. So muß man Lesebrillen erst aufsetzen oder wieder absetzen, wenn man lesen will oder gelesen hat, vorausgesetzt man hat sie zuvor gefunden. Bifokale Brillen erlauben zwar ein scharfes Sehen auf kurze Entfernung. Ausgesprochen nachteilig erweist sich dabei der im Nahsichtbereich des Brillenglases unvermeidbar eingeschränkte, flache Winkel, der den Brillenträger zu einer unnatürlichen Kopfhaltung - nach vorne unten geneigt oder in den Nacken gekippt - zwingt. Multifokale Brillen wiederum ermöglichen zwar eine fortlaufende Korrektur unterschiedlicher Entfernungen, aber die damit verbundene Sichtwinkeleinschränkung ist noch gravierender, und der Brillenträger muß ständig die Kopfhaltung ändern, um einen bestimmten Gegenstand in einer bestimmten Entfernung auch scharf zu sehen.

Außerdem hat eine ganze Anzahl Menschen Schwierigkeiten damit, sich an eine bifokale oder an eine multifokale Brille überhaupt zu gewöhnen, und muß den Versuch gegebenenfalls wegen Kopfschmerzen und Schwindelgefühlen aufgeben.

Brillen, d.h. Brillengläser, deren Brennweiten mittels einer Vorrichtung veränderbar sind im Ansprechen auf die Berührung eines Schalters oder die Bewegung eines Hebels auf oder nahe der Fassung der Gläser wären offensichtlich von beträchtlichem Vorteil für den Sehhilfebenutzer. So wird zur Lösung dieses Problems nach den Vorveröffentlichungen US-PS 4.261.655 und US-PS 4.418.990 vorgeschlagen, Fluid-gefüllte flexible Linsen zu verwenden, die einstellbar sind auf veränderliche Schärfen bzw. Brennweiten. Die Flexibilität des Linsenmaterials und des Fluids in diesen Linsen ermöglichen eine kontrollierte Veränderung in ihren Brennweiten. Nachteilig erweist sich hierbei jedoch, daß die optische Qualität der Linsen während der Brennweitenveränderungen nicht aufrechtzuerhalten ist, so daß der nicht erzielte Erfolg, die optische Qualität der Linse beizubehalten, zu Verzerrungen führt, welche die Benutzung einer solchen Brill für ihren Träger inakzeptabel machen. Die Ursache für dieses Versagen liegt darin, daß die Formänderungen der Linsenoberflächen nicht im wesentlichen sphärisch bleiben während der Fokussierungsänderungen (Brennweitenveränderungen). Im Idealfall sollte die Oberfläche einer Linse sphärisch sein, bevor eine Brennweitenveränderung erfolgt, und sie sollte nach erfolgter Veränderung ebenfalls sphärisch bleiben.

Aufgabe der Erfindung ist es daher, eine optische Linse mit variabler Servo-Fokussierung (bzw. -Dioptrien) zu schaffen, welche die vorstehend aufgezählten Nachteile vermeidet und darüberhinaus weitere Vorteile bietet für Brillen, aber auch für Vergrößerungsgläser, Objektive oder Innenspiegel verschiedener optischer Apparate, z.B. als Okulare mit veränderbarer Brennweite in Mikroskopen. Insbesondere sollen flexible Linsen geschaffen werden, bei denen gewährleistet ist, daß die Änderungen der Oberflächen der Linsen während der Brennweitenveränderungen mit wesentlichen sphärisch bleiben. D.h. wenn eine Seite der Oberfläche einer Linse in seinem Stadium sphärische war, dann soll sie auch nach jeder vorgenommenen Veränderung sphärisch bleiben.

Erfindungsgemäß wird dies erreicht durch eine optische Linse bzw. optisches Linsensystem mit veränderbarer Servo-Fokussierung, die aus einem Paar optischer Membranen mit eigenem Umfangsrand besteht, von denen wenigstens eine flexibel ist. Eine Fassungsvorrichtung dient dazu, die beiden Membranen mit ihren Umfangsrändern in Nebeneinanderstellung in der Weise zu halten, daß die Flächen der Membranen und ihre Umfangskanten ein vorbestimmtes Volumen festlegen. Dieser Rauminhalt ist mit einem Brechungsfluid gefüllt. Eine mit der Fassung zusammenwirkende Steuer- bzw. Regelvorrichtung dient dazu, selektiv Kräfte an den Umfangsrand der Membranen anzulegen, die den Fluiddruck verändern. Die Membranen und die Fassung sind ausgebildet und derart angeordnet, daß die Membranflächen in im wesentlichen sphärischer Form auf Druckveränerungen im Fluid reagieren.

Vorteilhafte Weiterbildungen und Ausgestaltungen des Erfindungsgedankens ergeben sich aus den auf Patentanspruch 1 folgenden Patentansprüchen.

Eine Vielzahl von Anwendungsmöglichkeiten bietet sich für eine optische Linse mit variabler Servo-Fokussierung gemäß der Erfindung.

Ein Anwendungsbeispiel ist die variofokale Brille mit runden oder unrunden Gläsern. Es ist allgemein bekannt, daß ältere Menschen verschiedene Brillen jeweils für verschiedene Objektentfernungen benötigen. Weil die Flexibilität der Augenlinse mit dem Altern zunehmend verloren geht, benutzen die Menschen gewöhnlich eine Brille zum Lesen, die sie abnehmen, wenn die Entfernung zu dem zu betrachtenden Objekt zunimmt. In letzter Zeit sind zur Vermeidung dieser Unbequemlichkeit des Brille-Auf- und Absetzens u.a. bifokale, und neuerdings multifokale Sehhilfen bzw. Brillen in Gebrauch gekommen. Der Träger einer solchen Brille muß aber seine Blickrichtung durch Hoch- oder Abwärtsblicken einschränken, um den gewünschten Schärfenbereich, also die benötigte Brennweite, zu erhalten. Häufig bereitet dies merkliche Schwierigkeiten für den Brillenbenutzer, der sich mit Nackenverrenkungen und anderen Belästigungen abfinden muß. Mit der Erfindung benötigt man als Sehhilfe nur eine einzige Brille sowohl fürs Lesen, Sehen im Nah- und Fernbereich oder Sehen in weite Ferne. Eine Konstruktion ähnlich wie für normal geformte Brillengläser kann derart ausgebildet sein, daß sie zwei Vario-Linsen trägt, an welche eine kleine Leitung anschließt. Die Leitung, die in einem dekorativen Teil der Brille verborgen werden kann, dient dazu, unter der Wirkung einer Regelvorrichtung ein Fluid von und zu einem kleinen Fluidbehältnis zu übertragen. Das Behältnis kann aus kleinen Behältern an jeder Seite des die Brillengläser halternden Gestells oder auch zur Verwahrung in einer Tasche bestehen. Die Regelvorrichtung, die aus einem Kolbenzylinder oder einer anderen Art von druckausübender Bauweise bestehen kann, ist durch einen Hebel unter manueller oder motorischer Kraft betätigbar. Eine Vielzahl von Hebelpositionen, die verschiedene Fluiddrücke bewirken zwischen den Membranen solcher optischer Linsen, kann entsprechend den verschiedenen Brennweiten der Linsen vorgesehen sein.

Diese erfindungsgemäße Ausführungsform ist durch Automatisierung noch weiter zu verbessern.

Im folgenden werden Ausführungsbeispiele der Erfindung anhand der anhängenden Zeichnungen näher beschrieben.

Fig. 1a zeigt perspektivisch die Ansicht einer aus zwei Membranen bestehenden Linse.

Fig. 1b zeigt einen Schnitt durch eine Fassung der Linse.

Fig. 1c zeigt einen Querschnitt durch die Fassung und zwei darin gehaltene (gefaßte) Membranen.

Fig. 2 zeigt in einer Ansicht von schräg oben einige, voneinander unabhängige Halterungsabschnitte für die Membranen einer erfindungsgemäßen Linse.

Fig. 3a zeigt die Koordinaten, die Punkte auf einer Membranoberfläche angeben.

Fig. 3b zeigt einen Querschnitt einer Membran, wobei die richtung des Fluiddruckes auf die Membran dargestellt ist.

Fig. 4 zeigt eine Verbindungsleitung und Komponenten eines möglichen Mechanismus' für die Druckausübung auf das Fluid bzw. die Flüssigkeit.

Fig. 5a und 5b zeigen ein Beispiel eines Gestells oder einer Fassung für eine variable Linse, in der das Fluidvolumen bzw. die Fluidvolumenraumform zwischen den Membranen konstant bleibt, aber mit einer Anordnung zur Änderung des Fluidbzw. Flüssigkeitsdrucks versehen ist.

Fig. 6 zeigt ein Blockschaltbild eines automatisierten Systems zur Steuerung der Servo-Fokussierung einer Linse als eine Funktion des Objektabstands von der Linse.

Bevor Einzelheiten der Erfindung erläutert werden, erscheint es zweckmäßig, näher auf die theoretischen Grundlagen der Erfindung einzugehen. Ausgangspunkt sind zwei flexible, transparente, kreisrunds (schiebenartige) Membranen, die übereinandergelegt und entlang ihren Rändern verbunden sind. Dabei ist diese Verbindung dergestalt, daß der Raum zwischen den Membranen entlang deren Rändern so gering wie möglich ist. So wird ein hohler Raum zwischen den mittigen Flächen der Membranen geschaffen. Indem nun zwischen den Rändern der Membranen ein Versiegelungs- bzw. Abdichtungsmittel eingebaut wird, wird ein eingeschlossenes Volumen bestimmt, das mit einem Brechungsfluid gefüllt wird. Eine durch das Abdichtmittel geführte (Rohr-) Leitung läßt ein Fluid sich zwischen einem Behältnis oder Reservoir und dem eingeschlossenen Volumen austauschen, um den Fluiddruck innen zu ändern.

Wird nun das Volumen mit einem durchsichtigen Fluid von annähernd gleichem Brechungsindex wie die Brechungsindices der Membranen gefüllt, wie es die US-PS 4.261.655 beschreibt, so bildet dieser durch die Membranen und das zwischen ihnen eingesperrte Fluid definierte Aufbau eine optische Linse, deren Eigenschaften von dem Brechungsindex und von den Formen der Außenflächen der Membranen abhängen. Die exakte Form der das Fluidvolumen bildenden Innenflächen der Membranen ist ohne Bedeutung, wenn die Brechungsindices der Membranen und des Fluids im wesentlichen dieselben sind.

Wenn der Brechungsindex des Fluids zu dem der Membranen unterschiedlich ist, dann wird die optische Linse (d.h. ihre Eigenschaften) von dem Volumen des Fluids bestimmt, das zusammen mit den Linseneigenschaften der angrenzenden Membranen wirkt. Diese Anordnungen bilden ein "Vario-Objektiv".

Das Volumen und der Druck des in einer variablen Linse eingeschlossenen Fluids können veränderlich sein, indem ein Behältnis mit einem Fluid mit dem Fluid zwischen den Membranen über eine Leitung verbunden wird. Es gibt einen Sonderfall, in dem keinerlei Übertragung von Fluid in die Linse hinein oder aus ihr heraus notwendig ist, um ihre Brennweite zu ändern. In diesem Falls bewirkt die Änderung des Drucks des zwischen den Membranen eingesperrten Fluids Veränderungen in der Wölbung der Membranen selbst ohne jede Änderung im Volumen des Fluids. Allgemein stehen jedoch für eine gegebene Ausführung die Änderungen in Druck und Volumen in Beziehung einzig zu der Flächenform der Membranen und damit auch den daraus sich ergebenden optischen Eigenschaften der Linse. Wenn die Flächenverschiebungen (Verformung) der Membranen bei jedem aufgebrachten Druck im wesentlichen sphärisch bleiben, so gewinnt man in der Tat eine Qualitätslinse, welche die Basis für verschiedene Anwendbarkeiten sein kann. Darüber hinaus räumen die exakte Wölbung der Membranen- und Fluidflächen sowie die exakten Brechungsindices der Membranen und des Fluids ein Ausmaß an Freiheit ein in einer Planung für optimierte Aberrations- oder Farbkorrektur.

Die vorstehende Beschreibung ist sogar dann zutreffend, wenn nur eine der Membranen flexibel ist. Dabei ist es wichtig zu beachten, daß irgendeine Außenfläche der Linse a priori nicht sphärisch sein muß. Das heißt, eine Fläche einer Linse kann eine bleibende optische Korrektur einer Art aufweisen, jedoch sollten die Wölbungsänderungen während der Veränderung der Brennweite von Natur aus sphärisch erfolgen, damit die Linse richtig funktioniert. Genauer gesagt, wenn F1(x,y) die Flächenfunktion der Vario-Linse an jedem Punkt (x,y) unter dem Druck P1 bestimmt, und F2(x, y) die Fläche unter einem Druck P2 bestimmt, dann erfordert die richtige Funktion der Linse, daß die Funktion V der Flächenverschiebung, nämlich -

(1)     $V12(x,y) = F1(x,y) - F2(x,y)$

eine sphärische Fläche bestimmt oder zumindest eine gute Annäherung (annähernde Gleichheit) einer solchen Fläche für jedes Paar Drücke P1 and P2.

Nach dem Hook'schen Gesetz kann man annehmen, daß die Funktion Vij(x,y) linear proportional ist in Bezug auf den Wert der Druckunterschiede für jede ausreichend kleine Änderung Pi - Pj, die betroffen sein kann. Das heißt:

(2)     $Vij(x,y) = \beta(x,y) \cdot (Pi - Pj)$

für jedwedes (x,y), wo $\beta$ ein ortsabhängiger Proportionalitätskoeffizient ist.

Eine Art, eine gute Annäherung der in der Gleichung (1) aufgestellten Bedingung zu gewährleisten, besteht in der Anwendung einer kreisrunden Membran von fast gleichmäßiger Dicke gleichmäßiger Flexibilität. Die Anlegung bestimmter Kräfte entlang des Umfangsrandes der Membran fixiert den Umfangsrand der Membran im Raum. Diese Kräfte sollten senkrecht zur Fläche ausgeübt werden und keine Drehkraft entlang dem Umfangsrand ausüben. Wenn Druck an eine Seite der Membranen durch ein Fluid angelegt wird, ist dieser Druck nach dem Pascal'schen Gesetzt gleichmäßig. Nachweisbar, zum Beispiel aus "Formulas for Stress and Strain", 5. Auflage von Raymond J. Roark und Warren C. Young, McGraw Hill Book Company, werden die sich daraus ergebenden Flächenänderungen im wesentlichen sphärisch sein, wie es zur Erfüllung der Gleichung (1) erforderlich ist.

Eine zusätzliche Korrektur der Wölbung der Fläche kann dadurch eingebracht werden, daß die Dicke der Membran variiert wird. Anders gesagt: Indem man die Dicke der Membran räumlich abhängig bzw. bedingt macht, kann eine Kompensation für die Wölbung der Fläche erfolgen. Zum Beispiel ist eine Abweichung von einer sphärischen Fläche, die gleichwohl radiale Symmetrie aufweist, durch eine Membran erreichbar, deren Dicke eine Funktion des Radius' der Membran darstellt (ihr entspricht). Eine Bestimmung der Dickefunktion kann auf herkömmliche Weise durch Verwendung der "finite elements"- oder "finite differences" - Methode zur Lösung von partialen Differentialgleichungen berechnet werden, welche die Flächenform unter Druckabänderungen innerhalb der Grenzbedingungen bestimmen, die abhängig sind von den unterschiedlichen Typen von Fassungen, in welche die Membranen montiert sind. Einzelheiten können der oben zitierten Schrift Roark et al. entnommen werden.

Die vorstehend beschriebene Linse ist kreisrund. Jedoch müssen die definierenden Membranen nicht kreisrund sein, um eine variable Linse mit Servo-Fokussierung zu bilden. Die wichtige Bedingung ist die Fähigkeit, die Entwurfsmethoden zu erweitern, so daß unter angelegtem Fluiddruck die zunehmenden Änderungen der Wölbung kontinuierlich einem sphärischen Gesetz folgen wie oben in Verbindung mit einer kreisrunden Linse beschrieben.

Eine unrunde Membran kann immer also Teil einer größeren kreisrunden Membran betrachtet werden, die man durch Wegschneiden von Teilen dieser größeren (kreisrunden) Membran enthält. Der Umfangsrand dieser "neuen" Membran würde somit aus zwei Arten von Ausschnitten bestehen: Randausschnitten, die zu der ursprünglichen größeren kreisrunden Membran gehören, und Ausschnitten, die durch die neue Schnittlinie definiert sind. Ein Weg, eine unrunde Linse zu konstruieren, besteht darin, die neu ausgeschnittenen Membranen entlang ihrem Umfangsrand zu fassen, so daß die Randbereiche der Linse dieselben Bedingungen erfahren, die an entsprechenden Stellen innerhalb der "originalen" kreisrunden Linse herrschten. Mit anderen Worten: Die Rand-bzw. Grenzbedingungen werden durch die Fassung hergestellt, die auf unrunde Linse auf dieselbe Weise wirkt, wie es auf den entsprechenden Teil der kreis runden Linse geschehen wäre.

An jedem Punkt eines Ausschnitts des ursprünglichen Umfangsrandes erfolgt, das Fassen (der Linse) lediglich durch eine Kraft, die auf die Fläche der Membran senkrecht trifft wie im Falle der ursprünglichen Linse. An jedem beliebigen Randpunkt entlang der neu geschnittenen Linie muß die Fassung sowohl eine senkrecht wirkende Kraft als auch eine Drehkraft auf die Kante der Membran ausüben. Die Drehkräfte und die (senkrechten) Kräfte an jeder Stelle und der Druck müssen so berechnet sein, daß sie ihren Gegenstücken für die ursprüngliche kreisrunde Membran gleichen. Dies kann dadurch erreicht werden, daß der Entwurf für die die Umfangsränder der Membranen haltende Fassung in Segmente geteilt wird, so daß unterschiedliche Kräfte entlang den Umfangsrändern angelegt werden. Alternativ können die Umfangsrandabstände räumlich abhängig bzw. bedingt sein.

Eine variable unrunde Linse kann auch erzielt werden ohne Verwendung von Drehkräften als Randbedingungen entlang ihrem Umfang. Wenn der Einfachheit halber nur senkrecht anliegende Kräfte als Randbedingungen angewendet werden, kann die Kompensation für das Fehlen von Drehkräften auf den Umfangsrand durch Modifizierung der Dickefunktion der Membran wie oben beschrieben erreicht werden. In beiden Fällen kann die sphärische Bedingung aufrechterhalten werden. Wenn jedoch Abweichungen von der sphärischen Natur wünschenswert sein sollten, könnten auch Modifizierungen der Membrandicke als einer Funktion ihrer örtlichen Festlegung bzw. Ortung erforderlich werden.

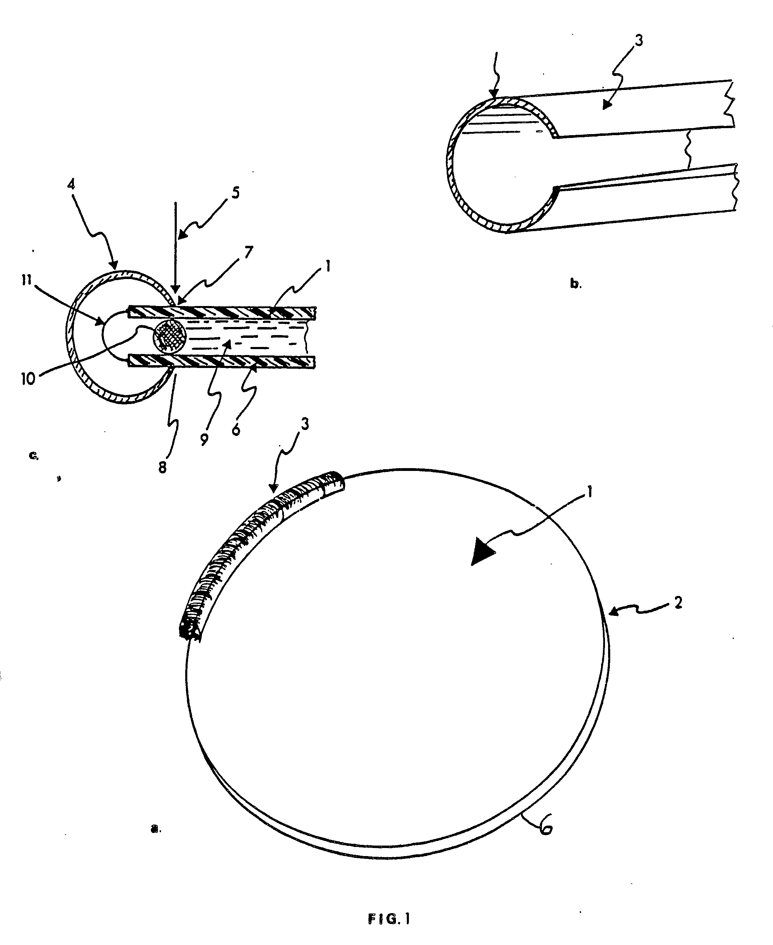

Unter Bezug auf Fig. 1 der anhängenden Zeichnungen wird nunmehr eine erfindungsgemäße Linse, die aus einem Paar nebeneinanderliegender kreisrunder optischer Membranen 1 und 6 mit jeweils einer Umfangskante 2 besteht, beschrieben. Die Umfangskanten 2 werden von einer Fassung 3 eingeklemmt oder -gespannt, die einstückig sein oder auch aus einer Mehrzahl einzelner Ausschnitte bestehen kann. Wie Fig. 1a veranschaulicht, kann die Fassung 3 einen C-förmigen Querschnitt aufweisen, der die Umfangskanten 2 der Membranen 1 und 6 mechanisch einklemmt. Die Fassung 3 ist an den Punkten 7 und 8 an den Membranen 1 und 6 eingelassen und legt eine Kraft in Richtung des Pfeiles 5 an die Membranen 1 und 6 an den Verbindungspunkten 7 und 8 der Fassung 3 mit den Membranen 1 und 6 an. Wenn zwischen Fassung 3 und dem Material der Membranen 1 und 6 eine Versiegelung besteht, kann die Fassung 3 auch eine Drehkraft anlegen, wie mit Ziffer 7 angegeben ist. Die Fassung 3 ist elastisch, so daß eine Änderung des Abstands zwischen den Verbindungspunkten 7 und 8 in Richtung des Pfeiles 5 die vorstehend erwähnten Kräfte und Drehkräfte entstehen läßt. Die Fassung 3 klemmt so den Umfangsrand 2 der einen Membran 1 oder 6 an den Umfangsrand 2 der anderen Membran 1 oder 6, so daß ein umschlossener Raum 9 zwischen den Flächen der Membranen 1 und 6 gebildet wird. Dieser umschlossene Raum 9 oder das Volumen 9 wird mit einem Brechungsfluid gefüllt. Eine Art, diesen Volumenraum 9 gegen eine Leckage des Fluids zu versiegeln, ist, eine ringförmige flexible Dichtung 10 zwischen den Umfangsrändern 2 der Membranen 1 und 6 vorzusehen. Vorzugsweise ist die Dichtung kreisrund im Querschnitt und einem O-Ring ähnlich. Solch eine Versiegelung ist besonders vorteilhaft, wenn die Membranen 1 und 6 kreisrund sind. Wenn diese jedoch unrund sind, stehen andere Abdichtungsmethoden zur Verfügung. Zum Beispiel kann eine flexible, ringförmige, undurchlässige Schicht 11 an den Umfangskanten beider Membranen 1 und 6 deren Verschluß bilden. In diesem Falle erübrigt sich die Verwendung einer Dichtung 10.

Die von der Fassung 3 auf die Umfangsränder 2 der Membranen 1 und 6 ausgeübte Vorspannkraft, gemessen in Gramm pro cm, liegt senkrecht an der Fläche der Membranen 1 und 6 an, wo diese die Fassung 3 berühren. Diese Kraft entsteht im Ansprechen auf den Fluiddruck im von den Membranen umschlossenen Raum 9. An jedem Umfangspunkt ist die Größe der Spannkraft proportional zu der Entfernung dieses Punkts von seiner Ruhelage, die definiert ist als der Punkt, der unter Bedingungen von Nulldruckfluid eingenommen wird. Drehkraft, gemessen in Gramm mal cm pro cm, mit der Richtung tangential zur Umfangslinie der Membran, wirkt der durch den Druck auf ihren Rand hervorgerufenen Drehung um die Kante entgegen und ist dem Drehwinkel des Punktes in Bezug auf seinen Ruhepunkt proportional. Der Ruhepunkt, d.h. die Ausgangslage, ist wie oben beschrieben die Stellung, die der Punkt einnimmt, wenn das Fluid zwischen den Membranen ohne Druck ist.

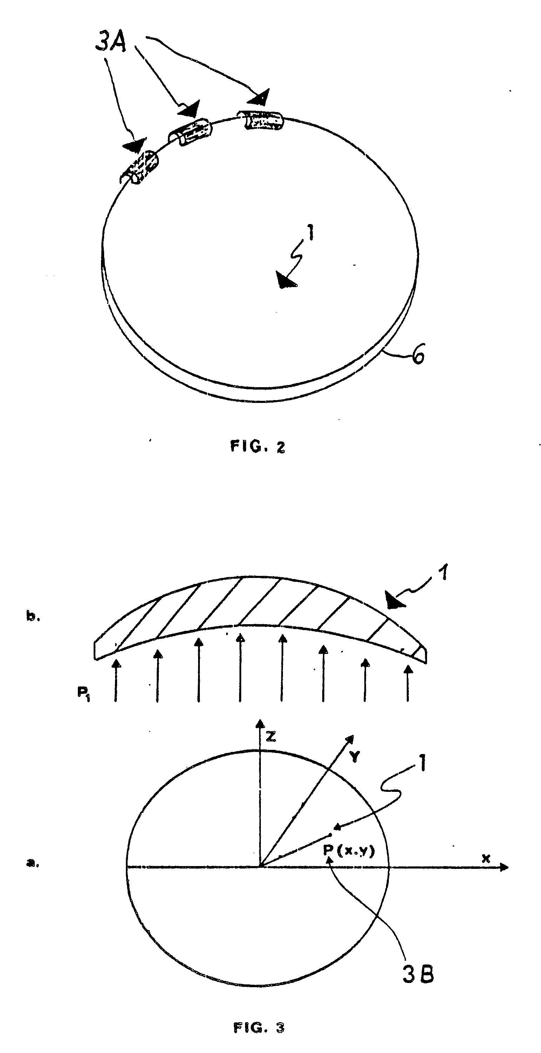

Fig. 2 zeigt die Membranen 1 und 6, wie sie zwischen getrennten Abschnitten 3A einer Fassung gehalten werden. Diese Abschnitte 3A stellen eine Mehrheit von Befestigungselementen dar, die eine fortlaufende bzw. ununterbrochen durchgehende Fassung ersetzen. Die Verwendung getrennter Fassungsabschnitte 3A erlaubt eine uneinheitliche Verteilung der Vorspannkräfte um die Umfangsränder 2 der Membranen 1 und 6. Dies erweist sich insbesondere in dem Falle als vorteilhaft, wenn unrunde Membranen zu fassen sind. In diesem Falle sind die Abschnitte 3A so ausgelegt, daß sie vorbestimmte Kräfte an den Rand 2 der Membranen in der Weise anlegen, daß die durch die Fassungsabschnitte 3A im Ansprechen auf Änderungen des Drucks im Fluid zwischen den Membranen erzeugten Kräfte begleitet werden von sphärischen Änderungen in der Oberfläche der Membranen 1 und 6.

Fig. 3 stellt schematisch das Aussehen der Fläche einer Membran 1 dar, wenn sie in Ruhestellung ungefähr in der x,y-Ebene eines Koorinatensystems liegt. Die Lage jedes Punktes 3B auf der Oberfläche der Membran 1 oder 6 wird, wenn Druck auf das Fluid ausgeübt wird und die Membran versetzt wird, in Bezeichnungen ihrer x,y,z-Koordinaten definiert. Die Unterdrucksetzung des Fluids führt zu einem gleichmäßigen Fluiddruck auf, wie in Fig. 3b dargestellt, die untere Fläche der Membran, wobei der Fluiddruck senkrecht an der unteren Außenfläche der Membran 1 oder 6 ansteht. Für geringfügige Versetzungen der Membran von der x,y-Ebene wird der Fluiddruck annähernd in z-Richtung gerichtet. Wenn Fi(x,y) die Stellung z der (Membran-) Fläche an der Stelle x,y angibt, wenn Druck Pi angelegt wird, dann definiert die Differenzfunktion, nämlich Fi - Fj die zunehmende Wölbung der oberen Außenfläche der Membran 1 oder 6 aufgrund der Druckänderung von Pi zu Pj. Die durch die Abweichung Fi - Fj definierte gedachte Fläche für jedes Paar Drücke Pi und Pj wird eine Sphärische Fläche sein, wenn die Dicke der Membranen genau richtig geplant ist. Die Errechnung der Dicke einer Membran als eine x,y-Funktion kann mittels eines Computers vorgenommen werden unter Verwendung der Rechenarten mit endlichen Elementen (finite elements methods) für die Lösung von Teildifferentialgleichungen, wie es in der oben erwähnten Veröffentlichung Roark et al. beschrieben ist.

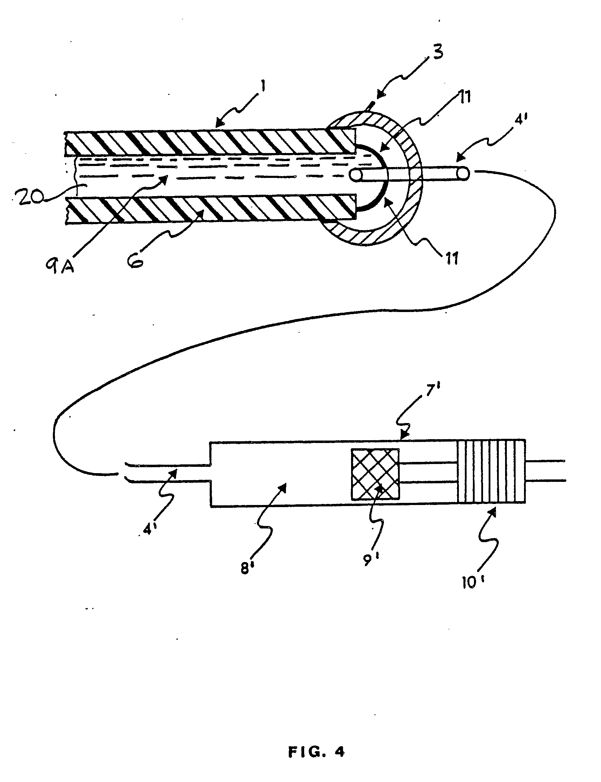

Fig. 4 zeigt eine optische Linse mit variabler Servo-Fokussierung, die zwei nebeinander liegende optische Membranen 1 und 6 umfaßt, von denen wenigstens eine flexibel ist, und die an ihren Umfangsrändern durch eine undurchlässige Schicht 11 versiegelt sind und damit ein ein eingeschlossenes Volumen 9A definieren, das mit Brechungsfluid 20 gefüllt ist. Die Umfangsränder werden durch die Fassung 3 zusammengeklemmt. Das Fluid 20 steht unter Druck durch eine Regelvorrichtung in Form eines Zylinders 7', der einen Kolben 9' enthält, welcher ein Fluid 8' durch einen Kanal 4' bzw. ein Leitungsröhrchen 4' in das Volumen 9A zwingt, wenn der Kolben 9' durch einen Motor 10', der selektiv betätigbar ist, bewegt wird. Die Achsenstellung des Kolbens 9' in dem Zylinder 7' wird den Druck im eingeschlossenen Volumen 9A bestimmen, wodurch der Benutzer einer solchen erfindungsgemäßen optischen Linse die Möglichkeit erhält, eine vorbestimmte Brennweite für die Linse zu wählen.

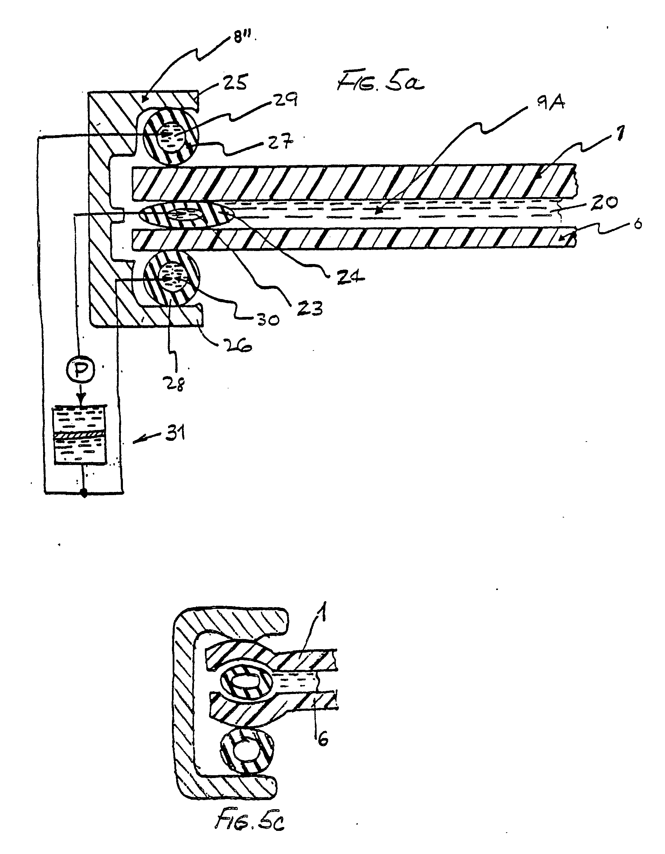

Fig. 5a zeigt eine Linse mit variabler servo-Fokussierung, die zwei nebeneinanderliegende optische Membranen 1 und 6 umfaßt, von denen wenigstens eine flexibel ist, und die an ihren Umfangsrändern durch eine ringförmige Dichtung, einen Dichtring 24, der eine mittige Bohrung 23 enthält, versiegelt ist. Dieser Aufbau definiert das zwischen den Membranen 1 und 6 eingeschlossene Volumen 9A, das mit Brechungsfluid 20 gefüllt ist. Die Umfangsränder der Membranen 1 und 6 werden durch die Fassung 8", die in diesem Ausführungsbeispiel in U-Form ausgebildet ist mit zwei Armen 25 und 26 in Abstand zueinander, eingeklemmt. Der Seitenabstand der U-Arme ist ausreichend, um die Umfangsränder der Membranen 1 und 6 und Hilfsdichtungen 27 und 28 aufzunehmen, die zwischen der Fassung 8" und der Membran, genauer: zwischen dem Arm 25 und der Membran 1 bzw. dem Arm 26 und der Membran 6, angebracht sind. Die Hilfsdichtung 27 weist Ringform auf und umfaßt eine mittige Bohrung 29. In gleicher Weise ist die Hilfsdichtung 28 ringförmig und enthält eine mittige Bohrung 30. Jede der Bohrungen 23, 29, 30 in den Dichtungen 24, 27, 28 ist mit einem Hilfsfluid gefüllt und ist ebenfalls mit der Regelvorrichtung 31 verbunden, die so ausgelegt ist, daß das Fluid in der Dichtung 24 mit dem Fluid in den Dichtungen 27 und 28 austauschbar ist. Mit anderen Worten: Die Betätigung der Pumpe P in der Regelvorrichtung 31 saugt Fluid aus der Dichtung 24 und führt die entsprechende Menge Fluid dem in den Dichtungen 27 und 28 enthaltenen zu. Bei richtiger Berechnung der Größe der Bohrungen in den verschiedenen Leitungen kann die Pumpe P auch zur Veränderung des Abstands zwischen den Umfangsrändern der Membranen 1 und 6 verwendet werden. Diese Abstandsänderung ist unabhängig von dem Fluidvolumen 20, das in dem eingeschlossenen Volumen 9A zwischen den Menbranen 1 und 6 enthalten ist.

Zur Verringerung des Abstands zwischen den Umfangsrändern der Membranen 1 und 6 wird die Pumpe P betätigt, um Hilfsfluid aus der Bohrung 23 im Dichtring 24 abzusaugen und dies den Bohrungen 29 und 30 in den Dichtungen 27 und 28 zuzuführen. Wenn die Umkehrung, d.h. eine Vergrößerung des Abstands, gewünscht wird, wird Fluid aus den Dichtringen 27 und 28 abgesaugt und dem Fluid im Dichtring 24 zugeführt.

Je geringer der Abstand zwischen den Umfangsrändern der Membranen 1 und 6 ist, desto größer ist der Druck im Inneren des eingeschlossenen Volumens 9A. Infolgedessen stellt sich die Wölbung der elastischen bzw. flexiblen Membran 1 oder 6 entsprechend ein und nimmt zu. Wenn der Abstand zwischen den Umfangsrändern der Membranen 1 und 6 erweitert wird, läßt der Druck im eingeschlossenen Volumen 9A nach mit der Folge, daß die Oberflächenwölbung der elastischen Membran 1 oder 6 reduziert wird. Auf diese Weise nimmt die Brennweite der Linse ab, wenn der Abstand zwischen den Membranen reduziert wird; sie nimmt zu, wenn der Abstand zwischen den Membranen erweitert wird. Die Brennweite kann bis Unendlich verändert werden, so daß sie sogar negativ wird.

In dem Ausführungsbeispiel nach Fig. 5A wird die Unterdruckstellung des Fluids 20 im eingeschlossenen Volumen 9A durch Betätigung der Regelvorrichtung 31 erreicht, d.h. durch Änderung des Abstands zwischen den Umfangsrändern der Membranen 1 und 6. Infolgedessen kommt der Viskosität des Brechungsfluids 20 im eingeschlossenen Volumen 9A keine Bedeutung zu, weil das Brechungsfluid 20 selbst nicht ein- oder ausgepumpt wird. Daher kann eine große Anzahl der herkömmlichen Brechungsfluide in den erfindungsgemäßen Linsen bzw. Objektiven verwendet werden.

Ein weiterer Vorteil der Ausführungsform nach Fig. 5a besteht darin, daß Volumen und Viskosität des zu übertragenden Fluids zur Vornahme von Änderungen in der Brennweite bedeutend geringer sind also es im Falle der Unterdruckstellung des Brechungsfluids in der herkömmlichen Weise mittels einer Pumpe wäre. Daher ist die zur Vornahme einer Brennweitenänderung erforderliche Zeit mit dem Ausführungsbeispiel nach Fig. 5a geringer als mit einer der vorstehend beschriebenen Linsen bzw. Objektive nach herkömmlichem Aufbau. Außerdem ist, weil die Menge des Hilfsfluids so klein ist, der Energiebedarf bei einem erfindungsgemäßen Ausführungsbeispiel viel geringer.

Schließlich liegt ein weiterer Vorteil der Erfindung darin, daß die maximale Dicke der optischen Linse mit variabler Servo-Fokussierung über den gesamten Bereich der Brennweitenänderungen deutlich verringert ist. Die Linse kann so ausgelegt werden, daß sie nur einen geringen Abstand zwischen den Membranen, entweder an deren Umfangsrändern oder nahe ihrer Mitten, aufweist bei extremen Brennpunkteinstellungen. Die erfindungsgemäße Linse kann daher von äußerst geringem Gewicht sein.

Weil ferner das Hilfsfluid, das für die Regelvorrichtung 31 verwendet wird, getrennt ist von dem Brechungsfluid, kann ein niedrig-viskoses Hilfsfluid verwendet werden, um die Betätigung bzw. den Betrieb zu erleichtern. Außerdem ist die Gesamtmenge des für die Vornahme einer bestimmten Änderung in der Brennweite zu übertragenden Fluids sehr gering im Vergleich zu den Volumenänderungen, die benötigt, werden, um das Brechungsfluid hin- und herzupumpen. Dies erlaubt eine kompakte Bauweise und die Einhaltung eines geringen Gewichts.

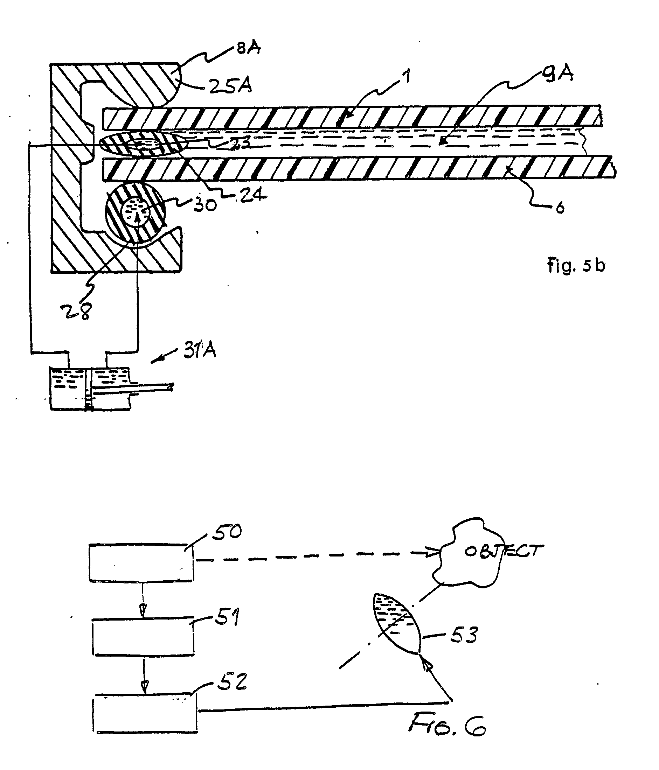

Das in Fig. 5b gezeigte Ausführungsbeispiel ähnelt dem nach Fig. 5a mit Ausnahme der Fassung, die bei dem Beispiel nach fig. 5b einen ausgebuchteten Arm 25A aufweist, die direkt auf dem Umfangsrand der einen Membran 1 anliegt. Der Umfangsrand der anderen Membran 6 wird von einer Dichtung 28 erfaßt, wobei in diesem Ausführungsbeispiel die zwischen den Membranen 1 und 6 vorgesehene Dichtung 24 dieselbe ist wie bei Fig. 5a. Nur beispielshalber sei erwähnt, daß, wie in Fig. 5c gezeigt, die Umfangsränder der Membranen 1 und 6 jeweils eine halbrunde Vertiefung oder eine lippenartige Ausformung aufweisen können, mit welchen ein Zwischenraum zur Aufnahme des Dichtringes 24 geschaffen wird. Eine solche Ausbildung erlaubt eine weitere Verringerung der Gesamtdicke der Linse.

Gleichwohl ist die Regelvorrichtung 31 wirksam, den Austausch des (Hilfs-) Fluids zwischen den mittigen Bohrungen zwischen diesen zwei Dichtringen 24 und 28 zu steuern, wodurch sie die Abstände zwischen den Umfangsrändern der Membranen steuert.

Unter Bezug auf Fig. 6 wird ein auf Automation umge stelltes Ausführungsbeispiel der Erfindung erläutert. In diesem liefert ein Entfernungsmesser 50, der entweder optisch oder ultrasonisch funktioniert, ein Signal, das die Entfernung eines Objekts vom Betrachter anzeigt. Ein auf dieses von dem Entfernungsmesser 50 erzeugtes Signal ansprechender Converter (Wandler) 51 wandelt diese Signale in ein Druck-Steuersignal um, das dem Druckregler 52 zugeführt wird. Dieser steuert im Ansprechen auf die Druck-Steuersignale den Fluid-Druck in der Linse 53, deren Aufbau dem der beschriebenen Beispiele entspricht. D.h., der Druckregler 52 kann so ausgelegt sein, wie er in den Fig. 5a oder 5b zum Zwecke der Abstandsänderung zwischen den Umfangsrändern der Membranen 1 und 6 dient, um den Innendruck im eingeschlossenen Volumen 9A zwischen den Membranen 1 und 6 zu steuern.

Die Verbesserungen und Vorteile, die durch die vorliegende Erfindung erreichbar sind, sind in der vorstehenden Beschreibung bevorzugter Ausführungsbeispiele der Erfindung offenbart. Zahlreiche Änderungen und Abwandlungen können vorgenommen werden, ohne den Bereich des Erfindungsgedankens zu verlassen.

In einem Spezialfall kann eine optische Linse nach der Erfindung einen Spiegel mit variablem Brennpunkt umgesetzt werden, indem die flexible Membran entweder auf ihrer Außen- oder Innenseite mit einer (reflektierenden) Beschichtung versehen wird. Alternativ kann eine flexible Membran aus Metall verwendet werden, so daß hierbei eine Beschichtung nicht erforderlich ist, weil das Metall als Reflektor dient.

**Ansprüche**

1. Optische Linse oder optisches Linsensystem mit variabler Servo-Fokussierung, **dadurch gekennzeichnet, daß** eine Linse aus einem Paar optischer Membranen (1, 6) besteht, von denen wenigstens eine flexibel ist, **daß** eine Fassung (3) den Umfangsrand (2) der einen Membran (1 oder 6) an den Umfangsrand (2) der anderen (6 oder 1) klemmt, wodurch ein eingeschlossener Raum oder Volumen (9, 9A) zwischen den Flächen der Membranen (1,6) gebildet ist, **daß** das Volumen (9, 9A) mit einem Brechungsfluid (20) gefüllt ist, **daß** die Fassung (3) so ausgebildet und angebracht ist, daß auf die Umfangsränder (2) der kreisrunden oder unrunden Membranen (1,6) an daraus ausgewählten Stellen Druck- und/oder Drehkräfte anlegbar sind, wodurch die Änderungen des Drucks des Fluids (20) die Fläche der flexiblen Membran (1 oder 6) in im wesentlichen sphärischer Weise verschieben.

2. Optische Linse oder optisches Linsensystem nach Anspruch 1, dadurch gekennzeichnet, daß die Druckausübung auf das Fluid (20) und damit die Wölbung der Membran (1, 6) ohne Änderung des Volumens des Brechungsfluids (20) erfolgt durch Änderung des Abstands zwischen den Membranen (1, 6) entlang ihren Umfangsrändern (2).

3. Optische Linse oder optisches Linsensystem nach Anspruch 1 oder 2, dadurch gekennzeichnet, daß ein flexibler, hohler Abstandshalter (10) entlang dem Umfang der Membranen (1, 6) vorgesehen ist, der eine Versiegelung (10, 11) für das Brechungsfluid (20) im Volumen (9, 9A) bildet und mit vom Fluid (20) unabhängigem Hilfsfluid (8′) gefüllt ist, wodurch über eine wahlweise betätigbare Vorrichtung (7′, 8′, 9′; 10′) die Änderung des Drucks und des Volumens des Hilfsfluids (8′) betreibbar sind, die die optischen Eigenschaften der Linse ändern.

4. Optische Linse oder optisches Linsensystem nach Anspruch 1 bis 3, dadurch gekennzeichnet, daß die eine der Membranen (1, 6) von durch Änderungen im Druck des Brechungsfluids (20) veränderbarer Dicke ist, wobei die Flächenverschiebung dieser Membran deren sphärische Wölbungsfläche definiert und die Linse Brennweitenänderungen ohne Verzerrungen vornimmt.

5. Optische Linse oder optisches Linsensystem nach einem der Ansprüche 1 bis 4, dadurch gekennzeichnet, daß die Fassung (3) einzelne und unabhängig betätigbare Abschnitt (3A) für die Änderung des Drucks auf das Fluid (20) aufweist.

6. Optische Linse oder optisches Linsensystem nach einem der Ansprüche 1 bis 5, dadurch gekennzeichnet, daß eine von den Membranen (1, 6) starr ist.

7. Optische Linse oder optisches Linsensystem nach Anspruch 2, dadurch gekennzeichnet, daß ein Durchschnitts-"Ruhe"-Druck im Inneren der Linse (z.B. der atmosphärische Druck) einen Ruhezustand definiert, indem gesteuerte Druckveränderungen positiv oder negativ in Bezug auf den Ruhezustand sind während Veränderungen in diesem Druck, wodurch Ermüdungserscheinungen der Membranen (1, 6) aus flexiblem Material aufgrund wiederholter Verformungen aus ihrem Ruhezustand minimalisiert sind.

8. Optische Linse oder optisches Linsensystem nach einem der Ansprüche 1 bis 7, dadurch gekennzeichnet, daß eine Verbindungsleitung (4′) durch den Abstandshalter (10) und in den eingeschlossenen Volumenraum (9,9A) ohne Leck in der Versiegelung (11), wodurch die Übertragung von Brechungsfluid in und aus dem eingeschlossenen Volumen (9, 9A) möglich ist.

9. Optisch Linse oder optisches Linsensystem nach An spruch 8, dadurch gekennzeichnet, daß ein Vorratsbehälter an Brechungsfluid und daß Mittel zur Verbindung des Behälters mit dem eingeschlossenen Volumen (9, 9A) über die Leitung (4′) zur Druckanlegung an das Fluid (20) im eingeschlossenen Volumen (9, 9A) vorgesehen sind.

10. Optische Linse oder optisches Linsensystem nach einem der Ansprüche 1 bis 9, dadurch gekennzeichnet, daß das Brechungsfluid ein Gas sein kann.

11. Optische Linse oder optisches Linsensystem nach Anspruch 1, dadurch gekennzeichnet, daß das Material der Membranen (1, 6) ausreichend transport ist und geeignete Brechungseigenschaften aufweist für alle Arten von Licht einschließlich von sichtbarem, Infrarotlicht und Kombinationen davon.

12. Optische Linse oder optisches Linsenystem nach Anspruch 1, dadurch gekennzeichnet, daß sie ein Servo-System (52) (für die Brennweitenveränderungen), einen automatisierten Entfernungsmesser (50), einen Converter (51) zur Umwandlung von den Entfernungsmessersignalen in Druckwerte, die automatisch die Brennweiten der Linse (53) regeln, umfaßt.

13. Optische Linse oder optisches Linsensystem nach Anspruch 1, dadurch gekennzeichnet, daß deren Fassung (3, 3A, 8″) so ausgebildet ist, daß sie Kräfte an die Umfangsränder (2) jeder Membran (1, 6) anlegt, die gleichförmig und senkrecht zur Membran wirken.

14. Optische Linse oder optisches Linsensystem mit variabler Servo-Fokussierung,
**dadurch gekennzeichnet, daß** sie ein Paar optischer Membranen (1, 6) mit je einen Umfangsrand umfaßt, von denen wenigstens eine flexibel ist, und deren Umfangsränder nebeneinanderliegend angeordnet sind,
daß ein Fassungsmittel (3; 8", 25, 26; 8A; 25A, 26A) zum Halten der Membranen (1, 6) mit nebeneinanderliegenden Umfangsrändern in der Weise vorgesehen ist, daß die Flächen der Membranen (1, 6) und ihre Umfangsränder zwischen sich ein vorbestimmtes Volumen (9,9A) definieren,
daß dieses Volumen (9, 9A) von einem Brechungsfluid (20) ausgefüllt ist,
daß eine Steuervorrichtung (10', 7', 9', 8', 31, P, 23,24,25,29,28,30:8A,25A,23,24,28,30,31A;52) arbeitsmäßig mit dem Fassungsmittel (8",25,26,8A,25A,26A) zusammenwirkt zur wahlweisen Anlegung von Kräften an die Umfangsränder der Membranen (1,6), durch welche die Fluiddrücke im eingeschlossenen Volumen (9,9A) veränderbar sind,
**und daß** die Membranen (1,6) und die Fassung (3; 8",8A) so aufgebaut und angeordnet sind, daß die Fläche der flexiblen Membran (1 oder 6) im Ansprechen auf Änderungen des Druckes im Fluid (20) sich in im wesentlichen sphärischer Weise ändert.

15. Optische Linse oder optisches Linsensystem nach Anspruch 14, dadurch gekennzeichnet, daß das eingeschlossene Volumen (9, 9A) festgelegt bleibt, wenn Druckänderungen angelegt werden.

16. Optische Linse oder optisches Linsensystem nach Anspruch 14 oder 15, dadurch gekennzeichnet, daß der Abstand zwischen den Umfangsrändern der Membranen (1, 6) veränderbar ist.

17. Optische Linse oder optisches Linsensystem nach Anspruch 14, dadurch gekennzeichnet, daß zwischen den Umfangsrändern der Membranen (1, 6) eine hohle Dichtung (23, 24) vorgesehen ist gefüllte mit einem quantitativ regelbaren Hilfsfluid, wodurch der Umfangsrandabstand zwischen den Membranen (1, 6) bestimmbar ist.

18. Optische Linse oder optisches Linsensystem nach Anspruch 14, dadurch gekennzeichnet, daß die Vorrichtung in der Fassung (3; 8"; 8A) hohle Hilfsdichtungen (27, 29; 28, 30, 23, 24; 28, 30, 8A, 25A, 26A), die zwischen der Fassung und dem Umfangsrand der einen Membran vorgesehen sind gefüllt mit einem Regelfluid, und durch eine Steuervorrichtung zur Regelung des Prozentsatzes an (Hilfs-) Fluid in jeder hohlen Dichtung (23, 24; 27, 29; 28, 30).

19. Optische Linse oder optisches Linsensystem nach einem der Ansprüche 14 bis 18, dadurch gekennzeichnet, daß die Rahmenvorrichtung U-Form aufweist mit einem Paar Arme (25, 26) in Abstand zueinander, das die Umfangsränder der Membranen (1, 6) aufnimmt, wobei die Hilfsdichtungen (27, 28) jeweils zwischen einem Arm (25 oder 26) und einer der Membranen (1 oder 6) eingelegt sind.

20. Optische Linse oder optisches Linsensystem nach einem der Ansprüche 14 bis 19, dadurch gekennzeichnet, daß zwischen einem der Arme (25, 26) und einem Umfangsrand einer Membran (1, 6) eine Hilfsdichtung (28) gefüllt mit Regelfluid vorgesehen ist, und daß die Regelvorrichtung (31, 31A) das Regel- bzw. Hilfsfluid zwischen der Hilfsdichtung (28) und der Hohldichtung (23) proportioniert.

21. Verfahren zur variablen Brennweitenverstellung einer optischen Linse oder eines optischen Linsensystems, **dadurch gekennzeichnet, daß**, die Linse bzw. das Linsensystem aus zwei nebeneinander liegenden optischen Membranen gebildet ist, von denen wenigstens eine flexibel ist und die miteinander an ihren Umfangsrändern versiegelt sind, wodurch ein eingeschlossenes definiertes Volumen mit einem Brechungsfluid gefüllt, gebildet ist,
daß eine Vorrichtung zur Unterdruckstellung des Brechungsfluids vorgesehen ist und
daß die Membranumfangsränder durch eine Klemmvorrichtung gehalten sind, wodurch zunehmende Änderungen in der Wölbung eines Flächenbereiches der flexiblen Membran im Ansprechen auf den im Brechungsfluid herrschenden Druck einem sphärischen Gesetz folgt.

22. Optische Linse oder optisches Linsensystem mit variabler Servo-Fokussierung,
**dadurch gekennzeichnet, daß** die Linse bzw. das Linsensystem aus einem Paar optischer Membranen (1, 6) mit jeweils einem Umfangsrand und einer mittigen Fläche besteht, von denen wenigstens eine flexibel ist,
daß Versiegelungsmittel für die Abdichtung der Umfangsränder der Membranen (1, 6) vorgesehen sind, die ein eingeschlossenes Volumen (9, 9A) zwischen den Flächen der Membranen (1, 6) definieren,
daß das Volumen (9, 9A) mit einem Brechungsfluid (20) gefüllt ist,
daß Fassungsmittel zum Festklemmen der Umfangsränder der Membranen (1, 6) unter Anlegung von Druck-und Drehkräften auf die Umfangsränder vorgesehen sind, und
daß Mittel zur wahlweisen Anlegung von Druck auf das Brechungsfluid (20) im eingeschlossenen Volumen (9, 9A) angebracht sind.

23. Optische Linse oder optisches Linsensystem nach Anspruch 22, dadurch gekennzeichnet, daß die für die wahlweise Druckanlegung an das Brechungsfluid im Volumen vorgesehenen Mittel Vorrichtung umfassen, welche die Abstände zwischen den Umfangsrändern der Membranen (1, 6) ändern.

24. Optische Linse oder optisches Linsensystem nach Anspruch 22, dadurch gekennzeichnet, daß die Klemmvorrichtung (die Fassung) (3, 8", 8A) so ausgebildet und angeordnet ist, daß die Verteilung von an die Umfangsränder durch die Fassung angelegten Kräfte (Druck- und/oder Drehkräfte) ungleichmäßig um den Umfang der Membranen (1, 6) verteilt sind.

25. Optische Linse oder optisches Linsensystem nach einem der Ansprüche 1 bis 24, dadurch gekennzeichnet, daß wenigstens eine der Membranen mit einer Spiegelschicht versehen ist, wodurch ein Spiegel mit variablem Brennpunktabstand gebildet ist.

FIG. 1

FIG. 2

FIG. 3

**FIG. 4**

EP 0 299 393 A2

8"

25

29

27

FIG. 5a

9A

1

20

6

24

23

30

26

28

P

31

1

6

FIG. 5c

8A

25A

1

9A

23

30

24

6

28

31A

Fig. 5 b

50

OBJECT

51

53

52

FIG. 6